# EUROPEAN PATENT SPECIFICATION

(11) **EP 2 198 605 B1**
(45) Date of publication and mention of the grant of the patent: **23.05.2012**
(21) Application number: 07826300.1
(22) Date of filing: 07.09.2007
(51) Int. Cl.: G06F 3/048, H04N 5/445

(54) **METHOD AND DEVICE FOR SELECTING A SET OF SCHEDULE ITEMS**
VERFAHREN UND EINRICHTUNG ZUR AUSWAHL EINER MENGE VON SCHEDULE-POSTEN
PROCÉDÉ ET DISPOSITIF PERMETTANT DE SÉLECTIONNER UN GROUPE D'ÉLÉMENTS DE PROGRAMME

(43) Date of publication of application: 23.06.2010
(73) Proprietor: Koninklijke Philips Electronics N.V., 5621 BA Eindhoven (NL)
(72) Inventor: PAI, Deepak, NL-5656 AE Eindhoven (NL); BHAT, Sanjay, NL-5656 AE Eindhoven (NL); KULKARNI, Padma, L., A., NL-5656 AE Eindhoven (NL); RAMA MOORTHY, Anantharaman, NL-5656 AE Eindhoven (NL)
(74) Representative: Uittenbogaard, Frank
(86) International application number: PCT/IB2007/053610
(87) International publication number: WO 2009/030985

(56) References cited:
- EP-A- 1 317 141
- WO-A-00/74376
- US-A1- 2002 184 627
- US-A1- 2004 055 007
- US-B1- 6 735 777

## Description

The invention relates to an electronic device comprising electronic circuitry, the electronic circuitry being configured to select a first set of schedule items wherein the schedule items are selected for display, e.g. program listings.

The invention further relates to a method of selecting a set of schedule items, comprising the step of selecting a first set of schedule items wherein the schedule items are selected for display.

The invention also relates to a computer program product comprising software for enabling a programmable device to perform a method of selecting a set of schedule items.

An example of such a method is known from WO00/074376. The known method displays a first set of schedule items and allows a user to scroll through the schedule items. When the user scrolls, the method ensures that the row or column of the highlighted program listings contains other program listings of around the same time. A drawback of WO00/074376 is that it remains silent on what to do if the user does not scroll for a relatively long time. One option would be to exit the program listings screen after a few minutes. Another option would be to refresh the program listings every X minutes, where X is for example 30. Unfortunately, if X is too low or too high, the user's understanding of the schedule will deteriorate.

EP 1 317 141 A2 discloses: a program guide display apparatus for displaying a table of programs, which is a two dimensional arrangement for displaying program cells assigned to respective programs along the time and channel axes: a broadcast program search device which searches for a program whose broadcast time includes the current time; an earliest end time storage device which stores an end time of a program which finishes earliest of all the searched program, as an earliest end time; an earliest end time determination device which determines whether the current time is the stored earliest end time, or later than the stored earliest end time; and a program cell display device which displays a program cell with the stored earliest end time as a top display time of the table of programs, if the current time is the stored earliest end time, or later than the stored earliest end time.

It is a first object of the invention to provide an electronic device of the type described in the opening paragraph, which selects a set of schedule items which is relatively easy to understand for a user, amongst others because it is up to date.

It is a second object of the invention to provide a method of the type described in the opening paragraph, which selects a set of schedule items which is relatively easy to understand for a user, amongst others because it is up to date.

According to the invention, the first object is realized in that the electronic circuitry is further configured to, upon detecting that at least one highlighted schedule item of the first set of schedule items has an end time which precedes a current time or a user highlights at least one schedule item that has an end time which precedes a current time, select a second set of schedule items, the second set of schedule items not including said at least one schedule item and/or a schedule item preceding said at least one schedule item. By making the so-called "auto-refresh" period dependent on the end times of the schedule items, it is prevented that the schedule, e.g. an EPG, is refreshed too often or not often enough. This results in a schedule which remains easy for a user to understand. A schedule item whose end time is equal to the current time may also be considered to have an end time that precedes the current time.

The user may be able to accept that some of the selected schedule items have an end time preceding the current time, as long as he cannot accidentally select an elapsed schedule item, i.e. by ensuring that the highlighted schedule item has not elapsed.

The electronic circuitry is configured to attempt said detection upon a user highlighting the highlighted item. An auto-refresh is triggered by the highlighted schedule item elapsing. As a result, a user is never able to select an elapsed schedule item. This can advantageously be used in combination with the EPG updating every X minutes, e.g. every 30 minutes.

The schedule items may comprise broadcast programs, e.g. television programs. Broadcast programs and especially television programs are often listed electronically in an Electronic Program Guides (EPG), which is a quite popular application. Other applications are personal agendas and agendas in conference centers or the like.

The second set may be selected such that it comprises only schedule items with a start time on or after the current time. Even when only the elapsing of the *highlighted* program triggers an auto-refresh, it may be advantageous to refresh more than just the programs on the channel of the highlighted program. Refreshing all elapsed schedule items results in the most consistent set.

The second set may be selected such that it comprises all schedule items from the first set except the at least one schedule item and/or a schedule item preceding said at least one schedule item. When only the elapsing of the highlighted program triggers an auto-refresh, it is possible to refresh only the programs on the channel of the highlighted program. This helps to minimize the number of screen updates.

According to the invention, the second object is realized in that the method further comprises the step of, upon detecting that at least one highlighted schedule item of the first set of schedule items has an end time which precedes a current time or a user highlights at least one schedule item that has an end time which precedes a current time, selecting a second set of schedule items, the second set of schedule items not including said at least one schedule item and/or a schedule item preceding said at least one schedule item. This method may be performed by a computer program or an Internet EPG, for example.

These and other aspects of the invention are apparent from and will be further elucidated, by way of example, with reference to the drawings, in which:

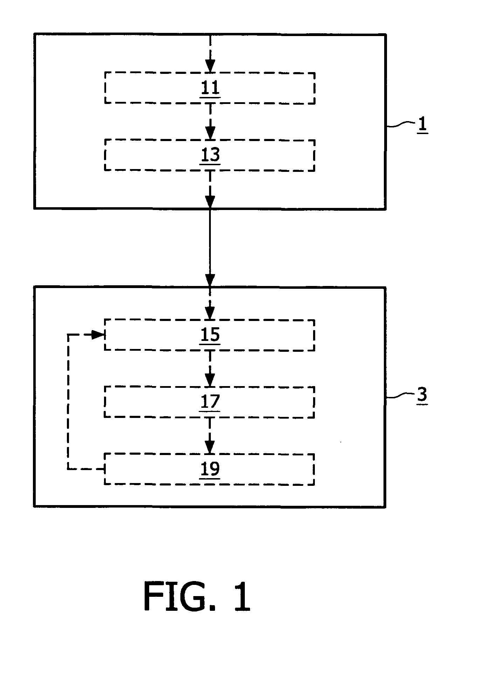

Fig. 1 is a flow chart of the method of the invention;
Fig. 2 shows an example of schedule items displayed by an embodiment of the method of the invention at a first moment and at a second moment; and
Fig. 3 is a block diagram of the electronic device of the invention.

Corresponding elements in the drawings are denoted by the same reference numerals.

The method of selecting a set of schedule items comprising at least two steps. A step 1 comprises selecting a first set of schedule items. A step 3 comprises, upon detecting that at least one of one or more of the first set of schedule items has an end time which precedes a current time, selecting a second set of schedule items, the second set of schedule items not including said at least one schedule item and/or a schedule item preceding said at least one schedule item.

In an embodiment of the method, step 1 comprises a step 11 of selecting and displaying the first set of schedule items and a step 13 of setting a timer for one of the first set of schedule items. The timer may be set, for example, for a highlighted schedule item or for the schedule item with the earliest end time. If the timer is higher than a certain maximum, it may be set to this maximum, e.g. to 30 minutes. If no timer is needed, e.g. refreshing is only performed after user input, step 13 can be omitted. In an alternative embodiment, polling is used instead of a timer.

In the embodiment, step 3 comprises a step 15 of waiting for the timer to expire and/or waiting for a user to highlight a schedule item that has an end time which precedes a current time. After such an event is signaled, the second set of schedule items is selected and displayed in step 17. In step 19, the timer is again set and waiting is resumed in step 15. If no timer is needed, step 19 can be omitted and the method then returns to step 15 immediately after step 17.

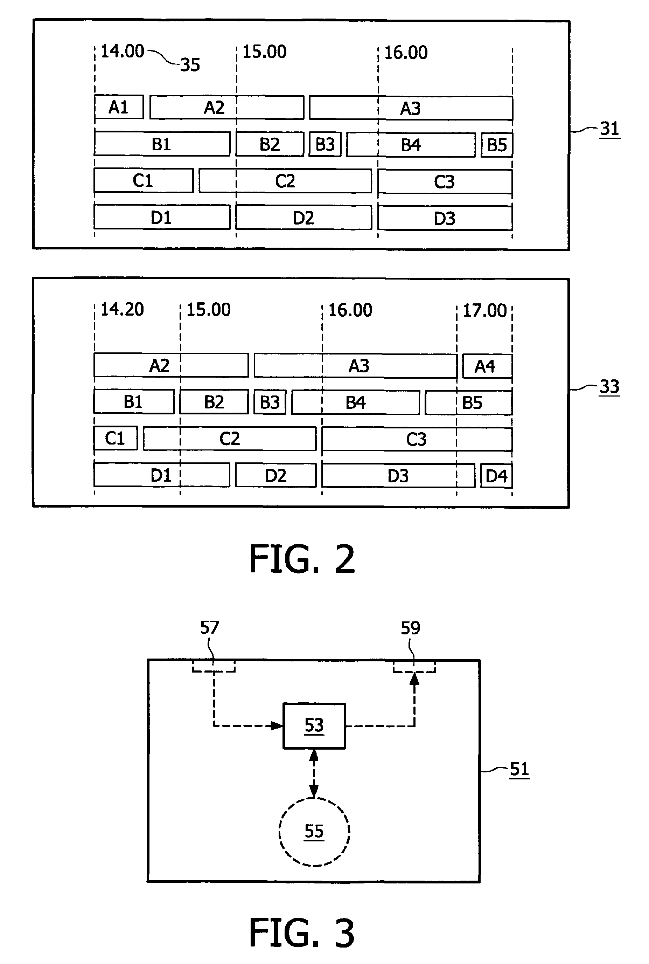

Fig. 2 shows an example of two sets of schedule items at different moments. The two sets are displayed as grids of irregularly spaced cells, but could alternatively be displayed as grids of regularly spaced cells, for example. The first set 31 is selected at 14:00 as indicated by time indicator 35. Program A1 is selected as the program that triggers the timer, either because it is the highlighted program or because it is the first program that will end. Program A1 runs for another 20 minutes. The timer is therefore set to 20 minutes. After 20 minutes, the second set 33 is selected. Program A1 has been removed from the second set 33, but all the other programs of the first set 31 are selected as part of the second set 33. New programs A4 and D4 have further been added to the second set 33. In an alternative embodiment, the method might list an expired program for each channel. In that case, the current time of the first set of schedule items 31 could be 15:00 and the timer would then be set to 30 minutes, because both program A2 and B2 would end in 30 minutes. At 15:30, a second set would be selected in which both program A1 and B1 would be removed.

The electronic device 51 comprises electronic circuitry 53, see Fig.3. The electronic circuitry 53 is configured to select a first set of schedule items and, upon detecting that at least one of one or more of the first set of schedule items has an end time which precedes a current time, select a second set of schedule items, the second set of schedule items not including said at least one schedule item and/or a schedule item preceding said at least one schedule item. The electronic device 51 may be a television, a PC, a game console, an optical disc recorder, a satellite receiver, a terrestrial receiver or a cable receiver, for example. The electronic circuitry 53 may be capable of executing a computer program. The electronic circuitry 53 may be an application-specific processor, as used in many DVD recorders, or a general-purpose processor, as used in many Media Center PCs.

The electronic device 51 may comprise a storage means 55, an input 57 and an output 59. The storage means 55 may comprise an optical disc reader/writer, a magnetic storage means, a solid-state memory, and/or a holographic storage means, for example. The input 57 and output 59 may comprise, for example, a network connector, e.g. a USB connecter or an Ethernet connector, an analogue audio and/or video connector, such as a coaxial connector, a cinch connector or a SCART connector, or a digital audio and/or video connector, such as an HDMI or SPDIF connector. The input 57 can be used to receive the schedule items, e.g. from VBI data in an analogue channel, from DVB-SI data in a digital channel or from the Internet. The input 57 and output 59 may comprise a wireless receiver and/or transmitter. The electronic device 51 may comprise a reproduction means (not shown). The reproduction means may comprise, for example, a display and/or a loud speaker.

While the invention has been described in connection with preferred embodiments, it will be understood that modifications thereof within the principles outlined above will be evident to those skilled in the art, and thus the invention is not limited to the preferred embodiments but is intended to encompass such modifications. The invention resides in each and every novel characteristic feature and each and every combination of characteristic features. Reference numerals in the claims do not limit their protective scope. Use of the verb "to comprise" and its conjugations does not exclude the presence of elements other than those stated in the claims. Use of the article "a" or "an" preceding an element does not exclude the presence of a plurality of such elements.

'Means', as will be apparent to a person skilled in the art, are meant to include any hardware (such as separate or integrated circuits or electronic elements) or software (such as programs or parts of programs) which perform in operation or are designed to perform a specified function, be it solely or in conjunction with other functions, be it in isolation or in co-operation with other elements. The invention can be implemented by means of hardware comprising several distinct elements, and by means of a suitably programmed computer. 'Computer program product' is to be understood to mean any software product stored on a computer-readable medium, such as a floppy disk, downloadable via a network, such as the Internet, or marketable in any other manner.

## Claims

1. An electronic device (51) comprising electronic circuitry (53), the electronic circuitry (53) being configured to:
- select a first set of schedule items wherein the schedule items are selected for display; and
- upon detecting that at least one highlighted schedule item of the first set of schedule items has an end time which precedes a current time or a user highlights at least one schedule item that has an end time which precedes a current time, select a second set of schedule items, the second set of schedule items not including said at least one schedule item and/or a schedule item preceding said at least one schedule item.

2. An electronic device as claimed in claim 1, wherein the schedule items comprise broadcast programs.

3. An electronic device as claimed in claim 2, wherein the broadcast programs comprise television programs.

4. An electronic device as claimed in claim 1, wherein the second set comprises only schedule items with a start time on or after the current time.

5. An electronic device as claimed in claim 1, wherein the second set comprises all schedule items from the first set except the at least one schedule item and/or a schedule item preceding said at least one schedule item.

6. A method of selecting a set of schedule items, comprising the steps of:
- selecting (1) a first set of schedule items wherein the schedule items are selected for display; and
- upon detecting that at least one highlighted schedule item of the first set of schedule items has an end time which precedes a current time or a user highlights at least one schedule item that has an end time which precedes a current time, selecting (3) a second set of schedule items, the second set of schedule items not including said at least one schedule item and/or a schedule item preceding said at least one schedule item.

7. A computer program product comprising software for enabling a programmable device to perform the method of claim 6.

## Patentansprüche

1. Elektronische Einrichtung (51) mit elektronischer Schaltungsanordnung (53), wobei die elektronische Schaltungsanordnung (53) so konfiguriert ist, dass sie:
- eine erste Menge von Zeitplanelementen auswählt, wobei die Zeitplanelemente zu Anzeigezwecken ausgewählt werden; und
- bei Detektieren, dass mindestens ein markiertes Zeitplanelement der ersten Menge von Zeitplanelementen eine Endzeit aufweist, die einer aktuellen Zeit vorausgeht, oder ein Benutzer mindestens ein Zeitplanelement markiert, das eine Endzeit aufweist, die einer aktuellen Zeit vorausgeht, eine zweite Menge von Zeitplanelementen auswählt, wobei die zweite Menge von Zeitplanelementen nicht das mindestens eine Zeitplanelement und/oder ein dem mindestens einen Zeitplanelement vorausgehendes Zeitplanelement enthält.

2. Elektronische Einrichtung nach Anspruch 1, wobei das Zeitplanelement Sendeprogramme umfasst.

3. Elektronische Einrichtung nach Anspruch 2, wobei die Sendeprogramme Fernsehprogramme umfassen.

4. Elektronische Einrichtung nach Anspruch 1, wobei die zweite Menge nur Zeitplanelemente mit einer Startzeit zu oder nach der aktuellen Zeit umfasst.

5. Elektronische Einrichtung nach Anspruch 1, wobei die zweite Menge sämtliche Zeitplanelemente aus der ersten Menge mit Ausnahme des mindestens einen Zeitplanelements und/oder eines dem mindestens einen Zeitplanelement vorausgehenden Zeitplanelements umfasst.

6. Verfahren zum Auswählen einer Menge von Zeitplanelementen, welches die folgenden Schritte umfasst, wonach:
- eine erste Menge von Zeitplanelementen ausgewählt (1) wird, wobei die Zeitplanelemente zu Anzeigezwecken ausgewählt werden; und
- bei Detektieren, dass mindestens ein markiertes Zeitplanelement der ersten Menge von Zeitplanelementen eine Endzeit aufweist, die einer aktuellen Zeit vorausgeht, oder ein Benutzer mindestens ein Zeitplanelement markiert, das eine Endzeit aufweist, die einer aktuellen Zeit vorausgeht, eine zweite Menge von Zeitplanelementen ausgewählt (3) wird, wobei die zweite Menge von Zeitplanelementen nicht das mindestens eine Zeitplanelement und/oder ein dem mindestens einen Zeitplanelement vorausgehendes Zeitplanelement enthält.

7. Computerprogrammprodukt mit Software, um es einer programmierbaren Einrichtung zu ermöglichen, das Verfahren nach Anspruch 6 auszuführen.

## Revendications

1. Dispositif électronique (51) comprenant un circuit électronique (53), ledit circuit électronique (53) étant conçu :
- pour sélectionner un premier groupe d'éléments de programme, dans lequel les éléments de programme sont sélectionnés pour affichage ; et
- s'il est détecté qu'au moins un élément de programme mis en surbrillance du premier groupe d'éléments de programme comporte une heure de fin qui précède l'heure actuelle ou si un utilisateur met en surbrillance au moins un élément de programme dont l'heure de fin précède l'heure actuelle, pour sélectionner un second groupe d'éléments de programme, le second groupe d'élément de programme ne comprenant pas ledit au moins un élément de programme et/ou un élément de programme précédant ledit au moins un élément de programme.

2. Dispositif électronique selon la revendication 1, dans lequel les éléments de programme comprennent des programmes de diffusion.

3. Dispositif électronique selon la revendication 2, dans lequel les programmes de diffusion comprennent des programmes de télévision.

4. Dispositif électronique selon la revendication 1, dans lequel le second groupe comprend uniquement des éléments de programme dont l'heure de début est identique ou postérieure à l'heure actuelle.

5. Dispositif électronique selon la revendication 1, dans lequel le second groupe comprend tous les éléments de programme du premier groupe, sauf l'au moins un élément de programme et/ou un élément de programme précédant ledit au moins un élément de programme.

6. Procédé permettant de sélectionner un groupe d'éléments de programme, comprenant les étapes qui consistent :
- à sélectionner (1) un premier groupe d'éléments de programme, lesdits éléments de programme étant sélectionnés pour affichage ; et
- s'il est détecté qu'au moins un élément de programme mis en surbrillance du premier groupe d'éléments de programme comporte une heure de fin qui précède l'heure actuelle ou si un utilisateur met en surbrillance au moins un élément de programme dont l'heure de fin précède l'heure actuelle, à sélectionner (3) un second groupe d'éléments de programme, le second groupe d'élément de programme ne comprenant pas ledit au moins un élément de programme et/ou un élément de programme précédant ledit au moins un élément de programme.

7. Produit-programme informatique comprenant un logiciel destiné à permettre à un dispositif programmable d'exécuter le procédé selon la revendication 6.
